# EUROPÄISCHE PATENTSCHRIFT

(11) **EP 2 148 472 B1**
(45) Veröffentlichungstag und Bekanntmachung des Hinweises auf die Patenterteilung: **16.09.2015**
(21) Anmeldenummer: 09009577.9
(22) Anmeldetag: 23.07.2009
(51) Int. Cl.: H04L 12/40, H04L 29/12, H02G 3/02, H04L 12/42, H04L 12/24

(54) **Anschlussmodul für ein Netzwerk, Verfahren zum Vernetzen von Räumen und Containersiedlung mit vernetzten Containern**
Connection module for a network, method for networking areas and container settlement with networked containers
Module de raccordement pour un réseau, procédé de mise en réseau de pièces et groupe de conteneurs doté de conteneurs mis en réseau

(30) Priorität: 24.07.2008 DE 102008002966; 24.07.2008 DE 202008000099 U
(43) Veröffentlichungstag der Anmeldung: 27.01.2010
(73) Patentinhaber: Yello NetCom GmbH, 48432 Rheine (DE); Münster, Josef, 49594 Alfhausen (DE)
(72) Erfinder: Fürstenau, Frank, 49811 Lingen (DE); Münster, Josef, 49594 Alfhausen (DE)
(74) Vertreter: Meissner, Bolte & Partner GbR

(56) Entgegenhaltungen:
- DE-A1- 19 709 827
- DE-A1-102004 013 428
- GB-A- 2 384 604
- GB-A- 2 420 645
- US-A1- 2003 050 737
- DAFÜR Gesellschaft für IT Systemtechnik: "ISABEL 1000TP - Einbau Switch für Kabelkanal oder Unterflur", , 6. Mai 2008 (2008-05-06), XP002595110, Gefunden im Internet: URL:http://www.dafuer.net/html/isabel_1000 tp.html [gefunden am 2010-08-02]
- Nexans - Wolfgang Beier: "Nexans holt Gigabit-Ethernet an den Arbeitsplatz", , 10. März 2008 (2008-03-10), XP002595111, Gefunden im Internet: URL:http://www.nexans-ans.de/out/u_001/pdf /u_001_00235.pdf [gefunden am 2010-08-03]

## Beschreibung

Die Erfindung betrifft ein Anschlussmodul zum Anschließen von wenigstens einem, über ein Netzwerkprotokoll ansteuerbaren Client an ein lokales und/oder globales Netzwerk mit einem aufstellbaren oder aufhängbaren Gehäuse, das als länglicher Kabelkanal ausgebildet ist, und mit zumindest einer ersten Übergabeschnittstelle zum Anschluss des Clients. Ferner betrifft die Erfindung ein Verfahren zum Anschließen von wenigstens einem, über ein Netzwerkprotokoll ansteuerbaren Client in einem Raum an ein lokales und/oder globales Netzwerk, insbesondere ein Vernetzen mobiler Räume sowie eine Ansammlung vernetzter Räume, insbesondere in Form von Messeständen oder Containersiedlungen.

Anschlussmodule und Netzwerke dieser Art sind allgemein bekannt und weisen üblicherweise eine sternförmige Verkabelung zu einem zentralen Knoten auf, in dem ein Server angeordnet ist. Über entsprechende Netzwerkkomponenten, wie beispielsweise einem Router oder einem Switch, können mehrere Netzwerke in Sterntopologie zusammengeschaltet werden.

Insbesondere zeigt der Stand der Technik das Folgende:

Die Anleitung "Isabel 1000TP - Einbauswitch für Kabelkanal oder Unterflur" der "DAFUR Gesellschaft für IT Systemtechnik" betrifft einen Switch zum Einbau beispielsweise in einen Kabelkanal zum Anschluss von Endgeräten auf Ethernetbasis.

Der Artikel "Nexans holt Gigabit-Ethernet an den Arbeitsplatz" von "Wolfgang Bayer" offenbart einen Einbauswitch beispielsweise für Kabelkanäle zur Vernetzung unterschiedlicher Komponenten mit einem Datennetzwerk auf Ethernetbasis.

Die deutsche Patentanmeldung DE 10 2004 013 428 A1 zeigt ein Datenübertragungssystem für ein Gebäude zur kabelgebundenen und kabellosen Anbindung unterschiedlicher Geräte.

Aus der GB 2 420 645 A geht ein Kommunikationsmodul für Mobilfunknetze, wie ein Modem, ein Server oder ein Router, zur Verbindung eines Computers mit einem Netzwerk hervor.

In der GB 2 384 604 A wird ein Fernwartungssystem mit Alarmfunktion beschrieben, das auf dem SMS-System eines Mobilfunknetzwerks aufsetzt.

Die DE 19 709 827 A1 offenbart ein Fernwartungssystem zur Überwachung bzw. Fernsteuerung per Mobilfunknetz, insbesondere per Kurzmitteilung.

Das Dokument US 2003/050737 betrifft ein System zur Vernetzung eines Hauses einschließlich PCs mit dem Internet, wobei auch eine einfache Stromversorgung angeschlossener Geräte vorgenommen wird.

Der Nachteil der eingangs beschriebenen Netzwerke besteht darin, dass eine aufwändige Gebäude- bzw. Raumverkabelung notwendig ist, die insbesondere bei sternförmiger Verkabelung im Bereich des Netzwerkknotens einen dicken Kabelstrang erfordert, da sämtliche Verbindungskabel von den Anschlussmodulen zu dem zentralen Knoten parallel verlaufen. Die Parallelschaltung der Anschlussmodule bedingt in Summe große Kabelmengen und Kabellängen. Der Verlegeaufwand und die damit verbundenen Kosten sind enorm, was insbesondere bei lediglich kurzzeitig benötigten Netzwerken, beispielsweise bei Baucontainern, Messeständen oder temporär ausgelagerten Büroräumen zu hohen Kosten führt.

Schließlich ist es schwierig, gerade bei kurzzeitig verlegten Netzwerken die einzelnen Kabel zu identifizieren oder auszutauschen bzw. zu entfernen. So muss bei Änderungen des Netzwerkes ein Netzwerktechniker die entsprechenden Kabel verlegen und die Geräte in das Netzwerk einbinden.

Ein fest verlegtes, etwas größeres Netzwerk erfordert üblicherweise eine Kupferverkabelung und, sofern eine Mehrzahl von Clients verwendet werden, aktive Router oder Switche, die nur von einem Fachmann eingerichtet werden können.

Aufgabe der Erfindung ist es, Anschlussmodule für ein Netzwerk bereitzustellen, mittels derer das Netzwerk einfach, schnell und kostengünstig aufbaubar und abbaubar ist sowie effektiv mit möglichst gleich bleibender oder vorzugsweise erhöhter Sicherheit aufgebaut werden kann ist.

Diese Aufgaben werden nach der Erfindung durch ein Anschlussmodul nach Anspruch 1, ein Verfahren nach Anspruch 14 und eine Containersiedlung nach Anspruch 19 gelöst.

Erfindungsgemäß wird ein Anschlussmodul zum Anschließen von wenigstens einem, über ein Netzwerkprotokoll ansteuerbaren Client an ein lokales und/oder globales Netzwerk vorgeschlagen, mit einem aufstellbaren oder aufhängbaren Gehäuse, das als länglicher Kabelkanal ausgebildet ist, und mit zumindest einer ersten Übergabeschnittstelle zum Anschluss des Clients, wobei das Anschlussmodul wenigstens eine, eine Netzwerkverbindung zwischen dem Netzwerk und dem Client über die erste Übergabeschnittstelle aktiv herstellende Verbindungsvorrichtung und einen mit der Verbindungsvorrichtung verbundenen Dateneingang sowie einen Datenausgang zur Verbindung mit dem Netzwerk und/ oder zum Aufbau einer Reihenschaltung mit mehreren Anschlussmodulen aufweist, wobei die Verbindungsvorrichtung und/oder das Netzwerkprotokoll, über das die Kommunikation innerhalb des Netzwerkes organisiert ist, derart ausgebildet sind, dass der an dem Anschlussmodul angeschossene Client innerhalb der Reihenschaltung adressierbar ist.

Das neue Netzwerk ist nun modular aufgebaut. Dies ist der wesentliche Vorteil gegenüber den bisher verwendeten, fest verlegten Gebäudeverkabelungen mit parallel verlegten Kabeln von einem zentralen Knoten des Netzwerks zu den einzelnen Netzwerkkomponenten.

Das Anschlussmodul ist im Wesentlichen fertig vorkonfiguriert und weist alle aktiven Komponenten auf, so dass es nur an die Netzwerkverbindung mit dem zentralen Knoten, d.h. dem Server angeschlossenen werden muss, um in dem entsprechenden Raum die Anschlussmöglichkeiten für den Client oder andere Komponenten bereitzustellen.

Clients im Sinne der Erfindung sind alle Gerate, die in ein Netzwerk einbindbar sind, beispielsweise Kommunikationsgeräte wie Computer, Server, Drucker, Telefone oder Geräte der Haustechnik, zum Beispiel Haussprechanlagen, Verbrauchszähler oder Komponenten einer Alarmanlage. Die Übergabeschnittstelle des Anschlussmoduls stellt eine Schnittstelle zur Verbindung eines Clients mit der Verbindungsvorrichtung dar. Diese Schnittstelle kann eine standardisierte Anschlussdose, wie beispielsweise RJ45-Dose bzw. -Buchse sein, an die ein oder mehrere Computer oder Telefone anschließbar sind. Alternativ kann die Übergabeschnittstelle eine Funkschnittstelle sein, beispielsweise ein WLAN (Wireless Local Area Netzwerk)-Zugangspunkt oder eine Bluetooth Sende-/ Empfangseinrichtung. Weiterhin kann das Anschlussmodul weitere Anschlussdosen für den oder andere Clients und/ oder weitere Geräte der Nachrichtentechnik und/oder sonstige elektrische Geräte aufweisen. Als Netzwerkprotokoll kann beispielsweise das Protokoll TCP/IP verwendet werden. Das Anschlussmodul kann über ein Kabel modular mit anderen Anschlussmodulen in Reihe geschaltet werden und zu einem Netzwerk mit dem Server verbunden werden. Hierzu bietet sich insbesondere eine Ringverkabelung mit einem einfachen Ring oder einem Doppelring an, wobei die Anschlussmodule sowohl bei der ringförmigen als auch bei allen sonstigen Konfigurationen zueinander in Reihe geschaltet werden. Die Anschlussmodule weisen für den Anschluss eine entsprechende Schnittstelle auf, über die einfach auch von nicht technisch vorgebildetem Personal eine Einbindung in das Netzwerk erfolgen kann. Für eine Reihenschaltung weist jedes Anschlussmodul neben dem Dateneingang auch einen Datenausgang auf.

Die Anschlussmodule weisen eine oder mehrere aktive Verbindungsvorrichtungen auf, die dazu eingerichtet ist bzw. sind, die an das Anschlussmodul angeschlossenen Geräte zu adressieren. Eine Verbindungsvorrichtung kann zum Beispiel ein Switch, ein Router oder auch ein anderes netzwerktechnisches Koppelelement, bis hin zu einem Computer, insbesondere einem Server, beispielsweise einem Printserver, sein oder ein derartiges Koppelelement oder einen Computer enthalten, der als Kleinrechner in das Anschlussmodul integriert ist. Diese Komponenten können, müssen aber nicht in den Anschlussmodulen oder in jedem der Anschlussmodule vorgesehen sein.

Bei einer bevorzugten Ausgestaltung der Anschlussmodule weisen diese Buchsen bzw. Stecker für den Anschluss von Glasfaserkabeln und/ oder Kupferkabeln als Dateneingang und Datenausgang auf, so dass über überbrückende Kabelabschnitte bi- oder unidirektionale Reihen-, Stern- oder Ringverkabelungen möglich sind. Der besondere Vorteil der Glasfaserkabel besteht darin, dass eine große Datenmenge übertragbar ist, eine elektromagnetische Entkopplung gegenüber anderen Teilen des Netzwerks erreicht wird und ein Überspannungsschutz gewährleistet ist. Kupferkabel haben demgegenüber den Vorteil, dass sie in den Materialkosten vergleichsweise günstig sind. Durch die erfindungsgemäße Verbindung von Anschlussmodulen in Reihe kann auf eine aufwändige Sternverkabelung, bei der jedes Anschlussmodul zu einem zentralen Knoten des Netzwerks geführt ist, verzichtet werden. Es sei angemerkt, dass zwei oder mehr in Reihe geschaltete Anschlussmodule Teil einer Ring- oder Sterntopologie des Netzwerks sein können.

Für den Anschluss der aktiven Komponenten oder auch nur zum Durchschleifen von Versorgungsspannung, kann das Anschlussmodul mit einem Stromeingang bzw. - ausgang versehen sein und Steckdosen aufweisen, um den eingespeisten Strom an elektrische Verbraucher in dem Raum abzugeben.

Das modulare Anschlussmodul ist mit seinem Gehäuse in Gestalt eines länglichen Kabelkanals so aufgebaut, dass es in dem Raum einfach angeordnet, zum Beispiel aufgestellt oder aufgehängt werden kann. Besonders bevorzugt ist dabei das Gehäuse des Anschlussmoduls als Stück eines Kabelkanals, der ein handelsüblicher Kabelkanal sein kann, ausgebildet. Dieser Kabelkanalabschnitt kann einfach in einem Raum aufgehängt werden und lässt sich leicht mit anderen Räumen, besonders bevorzugt über eine lose Verkabelung verbinden. Diese lose Verkabelung kann in benachbarten Kabelkanalabschnitten verlaufen, so dass in dem Raum beispielsweise benachbart zur vorgesehenen Stelle zum Aufhängen des Anschlussmoduls passive, also leere oder nur mit einer Stromversorgung versehene Stücke eines Kabelkanals angeordnet sind.

Das modulare, aktive Anschlussmodul, das die oben beschriebenen aktiven Komponenten enthält, kann dann zwischen die benachbarten passiven Module geschaltet werden, also im Raum zwischen die passiven Module gehängt oder über Steckverbindungen zwischen geschaltet werden. Dabei kann das Gehäuse an zumindest einer Stirnseite mit einem oder mehreren anderen Gehäusen in Form länglicher, passiver Kabelkanäle, zum Aufbau eines längeren, insbesondere raumlangen Kabelkanals zusammengesteckt oder verbunden werden. Sofern ein Raum keine Verkabelung benötigt, kann ein entsprechend langes passives Modul als "Dummy" zwischengeschaltet werden, dass ebenfalls eine Verkabelung, aber keine Anschlussmöglichkeit für Clients aufweist.

Die Verbindungsvorrichtung des Anschlussmoduls stellt eine Netzwerkverbindung zwischen dem lokalen oder auch globalen Netzwerk und dem Client aktiv her. Dabei sind die Verbindungsvorrichtung und/oder das Netzwerkprotokoll, über das die Kommunikation innerhalb des Netzwerkes organisiert ist, derart ausgebildet, dass ein an dem Anschlussmodul angeschlossener Client innerhalb der Reihenschaltung adressierbar ist. Hierbei kommen alle dem Fachmann bekannten Netzwerktechniken in Betracht, insbesondere wird ein Netzwerkmanagement unter Verwendung des TCP/IP-Protokolls bevorzugt verwendet werden. Aber auch andere Protokolle sind möglich, bis hin zu einem modifizierten Token-Ring-Netzwerk.

Das Anschlussmodul weist mit dem Dateneingang und dem Datenausgang einfach zu verkabelnde Anschlüsse auf, die es Jedermann ermöglichen, das Anschlussmodul in eine Reihenschaltung zu integrieren ohne dabei das Risiko einer Fehlschaltung einzugehen. Hierzu können Dateneingang und Datenausgang als Buchse bzw. Stecker ausgebildet sein, wobei zum Verbinden zweier Anschlussmodule ein Kabel einen Stecker eines ersten Anschlussmoduls mit einer Buchse des in Richtung der Reihenschaltung betrachtet benachbarten Anschlussmoduls überbrücken kann.

Alternativ kann aus dem Gehäuse auch zu jeder Seite jeweils ein Kabelende herausgeführt sein, wobei ein erstes Kabelende als Dateneingang und ein zweites Kabelende als Datenausgang mit entsprechender Schnittstelle an seinem freien Ende ausgebildet ist. Diese Kabelenden können je nach vorgesehenem Verwendungszweck so lang sein, dass sie ohne Verlängerungen ausreichen, um die Reihenschaltung aufzubauen. Auch ist es möglich, dass die Anschlussmodule kleine, bevorzugt in Aufwickelrichtung federbelastete Kabelrollen aufweist, sodass ein Kabelstummel in der gewünschten Länge herausziehbar ist.

Zusätzlich zu den Datenkabeln, die den Dateneingang und den Datenausgang bilden, kann das Anschlussmodul mehrere Dateneingänge und/ oder Datenausgänge aufweisen, die als steckbare Anschlüsse und/ oder als Kabelenden ausgeführt sein können. An diese können beispielsweise weitere Leitungen der Haustechnik, insbesondere Stromleitung mit Hochvolt- oder Niedervoltbelegung angeschlossen werden. Dies bietet sich insbesondere an, um eine Stromversorgung ebenfalls über das modulare System der Anschlussmodule aufzubauen. Auch andere Kommunikationskanäle, wie Telefonleitungen oder Daten einer Haussprechanlage können so über parallele, nach der gleichen Art aufgebaute Verbindungen aufgebaut werden.

Die Stecker oder Buchsen zum Aufbau der Verkabelungen entsprechen den üblichen Normen, im Falle der Datenverkabelung insbesondere den Normen der Nachrichtenübertragung. Insbesondere eine Glasfaserverkabelung kann so auch von Laien aufgebaut werden. Alternativ zu einer parallelen Verkabelung verschiedener Signalwege, beispielsweise für den Datenverkehr innerhalb eines Computernetzwerks, für die Telekommunikation innerhalb eines Telefonnetzwerks oder auch für die Spannungsversorgung können die unterschiedlichen Datenströme natürlich auch über ein gemeinsames Kabel, nämlich das Datenkabel übertragen werden. Hier kommen grundsätzlich zwei Verfahren in Betracht: Zum einen kann jedes Teilsignal auf eine ihm zugeordnete Trägerfrequenz aufmoduliert werden, so dass am Punkt der Einspeisung eine Modulationsvorrichtung und im modularen Anschlussmodul wenigsten eine Demodulationsvorrichtung vorgesehen ist. Hier wird dann das Signal aus dem Datenstrom separiert und gegebenenfalls nach Auslesen der Adressierung an den im Raum befindlichen Client weitergeleitet. Zum anderen kann natürlich auch ein gemeinsamer Datenstrom genutzt werden, wobei die einzelnen Signalkomponenten dann über das Netzwerkprotokoll voneinander separierbar sind.

Vorzugsweise kann jedes Anschlussmodul eine separate Stromversorgung aufweisen, die ein an eine externe Steckdose anschließbares Versorgungskabel umfasst. Die externe Steckdose befindet sich dabei vorzugsweise im Raum, in dem das Anschlussmodul angeordnet wird. Mit der Spannung der externen Steckdose kann wenigstens eine in dem Gehäuse angeordnete, von außen zugängliche Steckdose mit einer Versorgungsspannung versorgt werden.

Bei Verwendung eines Glasfasernetzes kann dieses ringförmig so ausgebildet werden, dass der Datenverkehr in beide Richtungen möglich ist Dies erlaubt es bei Unterbrechung der Datenverbindung, entweder durch eine Beschädigung oder durch das Abstöpseln eines Anschlussmoduls durch eine Erweiterung oder Verkleinerung des Netzwerkes, den Datenverkehr in die umgekehrte Richtung aufrecht zu erhalten. Lediglich die Netzleistung wird durch den umgekehrten Datenfluss kurzfristig etwas beeinträchtigt, so dass der normale Benutzer dies kaum bemerken wird.

Um eine möglichst große Ausfallsicherheit zu bieten kann jedes Anschlussmodul mit einer Fehlererkennung versehen sein, die anhand der Signallaufzeiten zum Server oder über andere übliche Techniken erkennt, wenn der Datenverkehr in eine Richtung unterbrochen ist. Eine entsprechende Fehlermeldung, die zum Beispiel in Kombination mit einer Identifizierung oder Positionsangabe des jeweiligen Anschlussmoduls die Information enthalten kann, in welche Richtung bei unidirektionalem Datenverkehr gesendet wird, kann der Server oder auch jeder Client über ein entsprechendes Auswerteprogramm leicht und schnell feststellen, wo die Leitungsunterbrechung erfolgt ist.

Die Anschlussmodule können innerhalb des Raumes über alle bekannten Verfahren mit den Clients verbunden sein. Insbesondere kann das Anschlussmodul neben einer Verkabelung, die bevorzugt als freie Kabel innerhalb des Raums ausgebildet ist, auch einen üblichen W-LAN-Router zum Aufbau eine Funknetzes rund um das Anschlussmodul oder eine Bluetooth-Sende-/Empfangsvorrichtung zum Aufbau eines Funknetzwerkes auf Basis des Bluetooth-Standards aufweisen. Natürlich sind auch eine Infrarotkommunikation oder andere bekannte Übertragungsarten möglich.

Auf die Datenleitung moduliert oder parallel hierzu können auch Telefonsignale oder DSL-Signale übertragen werden. In diesem Fall kann das Anschlussmodul einen NTBA (Network Termination for ISDN Basic rate Access), einen Splitter zum Teilen des Telefonsignal in ein DSL-Signal (Digital Subscriber Line) und ein ISDN-Signal (Integrated Services Digital Network) oder ein analoges Telefonsignal oder auch eine Telefonanlage aufweisen.

Mit den erfindungsgemäßen, modularen Anschlussmodulen kann nun besonders einfach ein Netzwerk, insbesondere als Ringnetzwerk aufgebaut werden. Dies eignet sind besonders zum Verkabeln von mobilen Räumen, kann aber auch zum kurz- oder längerfristigen Verkabeln von Wohn- oder Büroräumen oder ähnlichen offenen Räumen, wie Messeständen, oder geschlossenen Räumen, wie Containern, genutzt werden. Hierzu wird einfach das modulare Anschlussmodul in dem betreffenden Raum aufgestellt oder aufgehängt, anschließend die Ringleitung durch den Anschluss mit benachbarten Anschlussmodulen oder dem Server geschlossen. Eine dynamische Vergabe in IP-Adressen kann die angeschlossenen Clients dann dynamisch in das DHCP-Netzwerk (Dynamic Host Configuration Protocol) einbinden.

Soll später ein weiterer Raum hinzugenommen werden, wird einfach an einer Stelle die Ringleitung unterbrochen und ein weiteres Anschlussmodul, eventuell unter Verwendung weiterer Kabelsegmente zwischengeschaltet. Innerhalb der Ringleitung kann ein Server angeordnet sein, insbesondere bei kleineren Netzwerken kann aber auch ein Netzwerk gleichberechtigter Clients realisiert werden. Der Server oder einer der gleichberechtigten Clients können über eine entsprechende Schnittstelle mit einem anderen Netzwerk verbunden sein, wobei dies zum Beispiel das Internet als globales Netzwerk, ein WAN (World Area Network) einer Organisationseinheit oder auch ein lokales Netzwerk (LAN) eines Anbieters sein kann. Der letztgenannte Fall kann etwa bei Messehallen zum Einsatz kommen, wo jeder Stand mit mindestens einem modularen Anschlussmodul an ein Ringnetz innerhalb einer Messehalle angeschlossen wird, ein in den Ring integrierter Server dann entweder direkt an das Internet angeschlossen ist oder mit dem LAN der Messegesellschaft kommuniziert.

Als Clientkomponenten können neben den bereits genannten Computern auch sonstige adressierbare Geräte der Datenverarbeitung, insbesondere Speichermedien, Scanner, Drucker und Anzeigegeräte oder Geräte zur Aufnahme oder Wiedergabe von Ton- und/oder Bildinformationen über die modularen Anschlussmodule mit dem Server verbunden werden, Insbesondere sofern mit dem erfindungsgemäßen Verfahren mobile Räume oder Messestände verkabelt werden, kann in jedem Raum ein zumindest von einer Raumseite zur gegenüberliegenden Raumseite reichender Kabelabschnitt vorgesehen sein, der von einem durchgängigen Kabel oder mehreren, in Reihe geschalteten Kabeln gebildet ist, wobei bei Aufbau oder Unterteilung der Räume die Kabelabschnitte der einzelnen Räume untereinander verbunden werden oder unter Zwischenschaltung eines Anschlussmoduls untereinander verbunden werden.

Ein weiterer Vorteil gegenüber der üblichen Netzwerktechnik ist die Tatsache, dass die aktiven Komponenten im Raum in dem modularen Anschlussmodul angeordnet sind. Dieses kann mit einer Wärmeabfuhr, die zum Beispiel von einem oder mehreren Ventilatoren gebildet sein kann, versehen sein, so dass die Ausfallsicherheit aufgrund der vermeidbaren Überhitzung gegenüber kleinen, in einem eigenen Gehäuse ungekühlt angeordneten Routing- bzw. Koppel-Komponenten erhöht wird.

Schließlich können unterschiedliche Anschlussmodule fertig konfektioniert in verschiedenen Ausbaustufen vorgesehen werden, so dass sich durch den Austausch des Moduls leicht die Kapazität des Netzwerkes in einem Raum erhöhen lässt oder das Netzwerk an andere Anforderungen angepasst werden kann. Die Modularität ermöglicht schließlich auch die Wiederverwendbarkeit der Verkabelung, da die Anschlussmodule einfach wieder aus dem Raum entnommen werden und einem anderen Zweck zugeführt werden können. Auch beim Auf- und Abbau von Messeständen, Containern oder anderen mobilen Einsatzräumen können die einzelnen Module leicht ein- und ausgebaut werden, um die Verkabelung und das Netzwerk an die neuen Verhältnisse anzupassen.

Eine bevorzugte Anwendung der erfindungsgemäßen Technik ist die Verkabelung von Bürocontainern. Hier können die Container mit je einem oder mehreren Modulen versehen sein, wobei nicht mit in das Netzwerk einbezogene Container innerhalb des die Containersiedlung durchziehenden Netzes mit Kabeln innerhalb oder außerhalb des Containers überbrückt werden können. Zum Anschließen eines neuen Containers kann einfach der Ring aufgelöst werden und ein neuer Container integriert werden. Demgegenüber war bei der bisher verwendeten Sternvernetzung immer ein Netzwerktechniker notwendig, der den betroffenen Ast der Verkabelung lokalisiert und entfernt bzw. bei hinzukommenden Container oder erhöhtem Netzwerkbedarf in einem Container zusätzliche Kabel verlegt. Dies kann nun durch die Erfindung entfallen.

Weiterhin wird erfindungsgemäß ein Verfahren zum Anschließen von wenigstens einem, über ein Netzwerkprotokoll ansteuerbaren Client in einem Raum an ein lokales und/oder globales Netzwerk vorgeschlagen, bei dem in dem Raum wenigstens ein Anschlussmodul der vorbeschriebenen Art aufgestellt oder aufgehängt wird, das zumindest über den Dateneingang mit dem Netzwerk und über die erste Übergabeschnittstelle mit dem Client verbunden wird, wobei die Verbindungsvorrichtung aktiv eine Netzwerkverbindung zwischen dem Netzwerk und dem Client über die erste Übergabeschnittstelle herstellt und die Verbindungsvorrichtung und/oder das Netzwerkprotokoll, über das die Kommunikation innerhalb des Netzwerkes organisiert ist, den an dem Anschlussmodul angeschlossenen Client innerhalb der Reihenschaltung adressiert.

Das Anschlussmodul wird dabei mit einem Server und/oder weiteren Anschlussmodulen in Reihe geschaltet.

Das erfindungsgemäße Verfahren dient insbesondere der Vernetzung einer Mehrzahl von Räumen mit einem oder mehr zentralen Servern, wobei in jedem Raum zumindest ein Anschlussmodul angeordnet wird und die Anschlussmodule über eine vollständig freiliegende Kabelverbindung und/oder zumindest teilweise über eine feste Verkabelung miteinander in Reihe geschaltet werden bzw. werden können.

Ein Anschlussmodul kann mit dem Server oder dem weiteren Anschlussmodul über ein als Einfach- oder als Doppelkabel ausgebildetes Glasfaserkabel verbunden werden, wobei die Anschlussmodule bevorzugt zu einem einfachen oder doppelläufigen Ring miteinander vernetzt werden kann. Dabei wird das Glasfaserkabel mit dem Dateneingang eines Anschlussmoduls und dem Datenausgang eines weiteren Anschlussmoduls oder eines Servers verbunden und zum Schließen des Rings das letzte Anschlussmodul mit seinem Datenausgang mit einem Dateneingang des Servers verbunden.

Erfindungsgemäß werden über das Anschlussmodul Clientrechner und sonstige Geräte der Datenverarbeitung, insbesondere Speichermedien, Scanner, Drucker und Anzeigegeräte oder Geräte zur Aufnahme oder Wiedergabe von Ton- und/oder Bildinformationen mit einem Server verbunden.

Zusätzlich zu der Verkabelung für den Datenaustausch kann zumindest eine weitere Kabelverbindung sternförmig oder ringförmig an das Anschlussmodul angeschlossen werden. Weiterhin können und über diese zusätzliche Kabelverbindung insbesondere Signale für eine Telefonverbindung oder eine Türsprechanlage übertragen werden.

Das Anschlussmodul kann weiterhin mit einer Telefonanlage, einen Splitter zum Teilen eines ISDN und eines DSL Signals bestückt werden.

Bei dem erfindungsgemäßen Verfahren zum Einbinden mobiler Räume in ein Computernetzwerk wird vorzugsweise in jedem Raum ein zumindest von einer Raumseite zur gegenüberliegenden Raumseite reichender Kabelabschnitt vorgesehen, der von einem durchgängigen Kabel oder mehreren, in Reihe geschalteten Kabeln gebildet ist, wobei beim Aufbau oder Unterteilung der Räume die Kabelabschnitte der einzelnen Räume untereinander verbunden werden oder unter Zwischenschaltung eines Anschlussmoduls untereinander verbunden werden.

An zwei Raumgrenzen kann zum Anschluss jeweils eines der benachbarten Räume je ein Kabelstück mit einer Buchse oder einem Stecker vorgesehen werden, wobei die beiden Kabelstücke bei Anschluss desjenigen Raumes an das Netzwerk über ein Anschlussmodul miteinander verbunden werden, mit dem sie in Reihe geschaltet werden, oder, wenn in diesem Raum kein Anschlussmodul vorgesehen wird, über ein Überbrückungskabel miteinander verbunden werden.

Die Kabelstücke können einerseits fest mit dem Raum verbunden sein und andererseits ein freies Ende aufweisen, das gegen die Kraft einer Rückziehfeder aus einer Aufnahme, insbesondere einer Wickelvorrichtung herausziehbar ist.

Die Kabelabschnitte können fest mit dem Anschlussmodul verbunden sein, so dass zum Verkabeln eines Raumes zunächst das oder die Anschlussmodule in den Raum eingebracht werden und anschließend die Kabelabschnitte der Anschlussmodule benachbarter Räume miteinander zu einer Reihenschaltung verbunden werden.

Vorzugsweise können die Räume mit einem Datenkabel verkabelt werden und Telefonsignale und/oder Signale weiterer Funktionsgeräte, insbesondere einer Türsprechanlage, über das Datenkabel entweder als Datenstrom nach dem oder einem anderen Protokoll der Netzwerkverbindung codiert oder als zusätzliches Signal auf einer weiteren Trägerfrequenz übertragen werden. Die Signale können von einer Modulations-/Demodulationsvorrichtung des Anschlussmoduls von den Datensignalen getrennt werden. Das Anschlussmodul ist dabei zum Anschluss der weiteren Funktionsgeräte entsprechend vorbereitet.

Der Datenverkehr über eine Glasfaserdoppelleitung erfolgt vorzugsweise bidirektional im Rahmen eines Ringnetzwerkes.

Bei Unterbrechung des Ringes kann die Datenübertragung einseitig von der Fehlerstelle weg erfolgen, wobei die Anschlussmodule bei nur einseitigem Empfang, zur Lokalisierung des Fehlers an eine Zentrale, insbesondere den Server, die Datenempfangsrichtung melden, aus der sie Daten empfangen.

Schließlich umfasst die vorliegende Erfindung die Verwendung eines Anschlussmoduls der vorbeschriebenen Art zum Einbinden mobiler Räume mit Clients, insbesondere von räumlich begrenzten Messeständen oder Containern in ein Computernetzwerk, wobei in jedem Raum zumindest ein Anschlussmodul angeordnet wird, die Anschlussmodule untereinander und mit einem Server gemäß dem Verfahren nach einem der vorhergehenden Ansprüche verbunden werden und die Clients an das Anschlussmodul angeschlossen werden.

Mit dem erfindungsgemäßen Verfahren und dem zur Durchführung des Verfahrens verwendeten Anschlussmodul kann eine Containersiedlung mit mehreren nebeneinander und/oder übereinander gestapelten Containern aufgebaut werden, bei der in jedem Container zumindest ein Anschlussmodul der vorbeschriebenen Art angeordnet ist und die Anschlussmodule untereinander in Reihe geschaltet, insbesondere zu einem geschlossenen Ring miteinander verbunden sind.

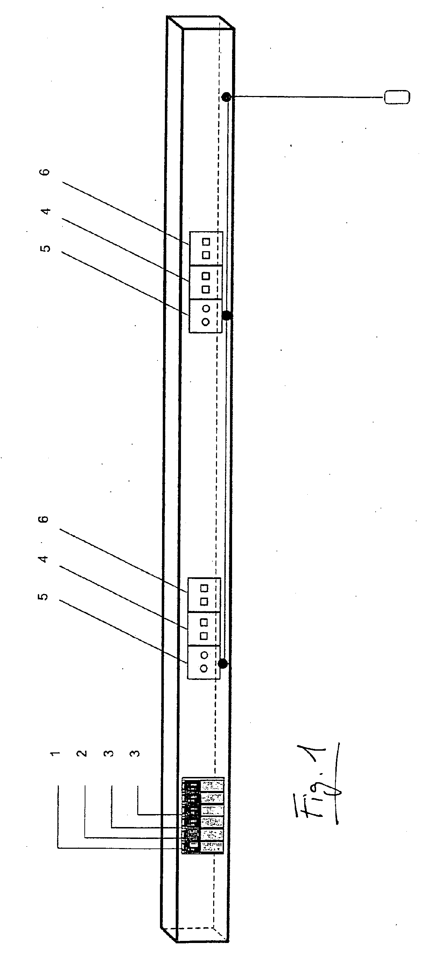

Weitere Merkmale und Vorteile der Erfindung ergeben sich aus der Zeichnung, die in Figur 1 eine bevorzugte Ausgestaltung eines modularen Anschlussmoduls zeigt, und aus den Unteransprüchen.

In Figur 1 ist ein Anschlussmodul dargestellt, dass als Gehäuse ein Stück eines Kabelkanals verwendet. Es handelt sich hierbei um einen handelsüblichen Kabelkanal, wobei das Gehäuse auch jede andere Ausgestaltung annehmen kann.

Das Gehäuse weist auf der linken Seite eine Stromzuführung auf und ist an der Vorderseite mit Buchsen zum Anschluss von Clients ausgestattet. Dies kann eine übliche Steckdose 5 zum Anschluss an einen Versorgungsstrom, eine RJ45-Netzwerkdose 4 oder eine Telefondose 6 sein. Aktive Netzwerkkomponenten stellen ein Netzteil 1 zum Transformieren des Versorgungsstromes, eine Aus- und Einkopplung 2 des optischen Signals in den Lichtwellenleiter und einen Switch 3 zum Adressieren der Clients bereit.

Grundsätzlich ist die Erfindung aber auf die oben beschriebenen Komponenten nicht beschränkt, wesentlicher Grundgedanke ist die Transformation von aktiven und/oder passiven Netzwerkkomponenten in das modulare Anschlussmodul, das als leicht transportables, in unterschiedlichen Konfigurationen aufbaubares Element vermarktet und wiederverwendet werden kann. Hierdurch unterschiedet es sich wesentlich von den bisher vertriebenen, handelsüblichen Netzwerkkomponenten in einem eigenen Gehäuse, da diese manuell oder über aufwändige Installationsroutinen in das Netzwerk eingebunden werden müssen, was regelmäßig den Einsatz eines Netzwerktechnikers erfordert und die Ausfallsicherheit reduziert.

## Patentansprüche

1. Anschlussmodul zum Anschließen wenigstens eines, über ein Netzwerkprotokoll ansteuerbaren Clients an ein lokales und/oder globales Netzwerk mit einem aufstellbaren oder aufhängbaren Gehäuse, das als länglicher Kabelkanal ausgebildet ist, und mit zumindest einer ersten Übergabeschnittstelle zum Anschluss des Clients, wobei das Anschlussmodul wenigstens eine, eine Netzwerkverbindung zwischen dem Netzwerk und dem Client über die erste Übergabeschnittstelle aktiv herstellende Verbindungsvorrichtung und einen mit der Verbindungsvorrichtung verbundenen Dateneingang sowie einen Datenausgang zur Verbindung mit dem Netzwerk und/oder zum Aufbau einer Reihenschaltung mit mehreren Anschlussmodulen aufweist, wobei die Verbindungsvorrichtung und/oder das Netzwerkprotokoll, über das die Kommunikation innerhalb des Netzwerkes organisiert ist, derart ausgebildet sind, dass der an dem Anschlussmodul angeschlossene Client innerhalb der Reihenschaltung adressiert wird,
wobei die Verbindungsvorrichtung ein Router und/oder ein Switch (3) ist oder einen Router und/oder einen Switch (3) umfasst, **dadurch gekennzeichnet, dass** ein an einer externen Steckdose (5) anschließbares Versorgungskabel vorgesehen ist, das zur Versorgung wenigstens einer in dem Gehäuse angeordneten, von außen zugänglichen Steckdose (5) mit einer Versorgungsspannung versorgt wird, wobei eine Meldevorrichtung vorgesehen ist, die dazu eingerichtet ist, im Falle eines Fehlers des Anschlussmoduls oder einer Unterbrechung der Verbindung ein Fehlersignal mit einem Positionscode an eine Zentrale zu übermitteln.

2. Anschlussmodul nach Anspruch 1, **dadurch gekennzeichnet, dass** die Meldevorrichtung eine SIM-Karte aufweist und dazu eingerichtet ist, den Fehlercode über eine drahtlos gesendete SMS abzusetzen.

3. Anschlussmodul nach Anspruch 1 oder 2, **dadurch gekennzeichnet, dass** das Gehäuse an zumindest einer Stirnseite mit einem oder mehreren anderen Gehäusen in Form länglicher Kabelkanäle, zum Aufbau eines längeren, insbesondere raumlangen, Kabelkanals zusammensteckbar oder verbindbar ist.

4. Anschlussmodul nach einem der vorhergehenden Ansprüche, **dadurch gekennzeichnet, dass** aus dem Gehäuse ein Kabelende herausgeführt ist, das den Dateneingang bildet, oder dass der Dateneingang ein steckbarer Anschluss, insbesondere ein Stecker oder eine Buchse ist.

5. Anschlussmodul nach einem der vorhergehenden Ansprüche, **dadurch gekennzeichnet, dass** aus dem Gehäuse ein Kabelende herausgeführt ist, das den Datenausgang bildet oder dass der Datenausgang ein steckbarer Anschluss, insbesondere ein Stecker oder eine Buchse ist.

6. Anschlussmodul nach einem der vorhergehenden Ansprüche, **dadurch gekennzeichnet, dass** der Dateneingang und der Datenausgang optische Schnittstellen zum Anschluss des Anschlussmoduls an ein Glasfasernetz oder Glasfaserdoppelnetz sind.

7. Anschlussmodul nach einem der vorhergehenden Ansprüche, **dadurch gekennzeichnet, dass** er zumindest eine weitere, von der ersten Übergabeschnittstelle unterschiedliche, mit der Verbindungsvorrichtung verbundene Übergabeschnittstelle zum Anschluss eines Endgerätes eines von dem Client verschiedenen Endgerätetyps aufweist.

8. Anschlussmodul nach Anspruch 7, **dadurch gekennzeichnet, dass** die erste und/oder die weitere Übergabeschnittstelle eine Funkschnittstelle ist/sind und das Anschlussmodul einen WLAN-Router und/oder eine Bluetooth-Sende-/Empfangsvorrichtung zum Aufbau eines Funknetzwerkes in der Umgebung aufweist, der/die die Funkschnittstelle bereitstellt.

9. Anschlussmodul nach einem der vorhergehenden Ansprüche, **dadurch gekennzeichnet, dass** die Verbindungsvorrichtung eine Modulations-/DemodulationsVorrichtung aufweist, die dazu eingerichtet ist, unterschiedliche Signalarten, die über verschiedene Trägerfrequenzen oder Übermittlungsprotokolle über den Dateneingang bereitgestellt werden, voneinander zu trennen, und den verschiedenen über die unterschiedlichen Übergabeschnittstellen angeschlossenen Endgeräten zuzuführen.

10. Anschlussmodul nach einem der vorhergehenden Ansprüche, **dadurch gekennzeichnet, dass** es einen Computer aufweist, der zum Adressieren der Clients mit den Komponenten der Verbindungsvorrichtung zusammenwirkt oder diese enthält.

11. Anschlussmodul nach einem der vorhergehenden Ansprüche, **dadurch gekennzeichnet, dass** es einen NTBA, einen Splitter zum Teilen eines Telefonsignal in ein DSL-Signal und ein ISDN-Signal oder ein analoges Telefonsignal, oder eine Telefonanlage aufweist.

12. Netzwerk, **gekennzeichnet durch** mehrere Anschlussmodule nach einem der vorhergehenden Ansprüche, wobei zumindest mehrere der Anschlussmodule in einer Reihenschaltung miteinander verbunden sind.

13. Netzwerk nach dem vorhergehenden Anspruch, **dadurch gekennzeichnet, dass** die Versorgung mit der Netzwerkverbindung und/oder mit der Versorgungsspannung jeweils als steckbarer Anschluss ausgebildet ist, und wobei die Anschlussmodule vorzugsweise mittels eines Kabels mit anderen benachbarten Anschlussmodulen in Reihe schaltbar sind.

14. Verfahren zum Anschließen von wenigstens einem, über ein Netzwerkprotokoll ansteuerbaren Client in einem Raum an ein lokales und/oder globales Netzwerk, wobei in dem Raum wenigstens ein Anschlussmodul nach einem der vorherigen Ansprüche aufgestellt oder aufgehängt wird, das zumindest über den Dateneingang mit dem Netzwerk und über die erste Übergabeschnittstelle mit dem Client verbunden wird, wobei die Verbindungsvorrichtung aktiv eine Netzwerkverbindung zwischen dem Netzwerk und dem Client über die erste Übergabeschnittstelle herstellt und die Verbindungsvorrichtung und/oder das Netzwerkprotokoll, über das die Kommunikation innerhalb des Netzwerkes organisiert ist, den an dem Anschlussmodul angeschlossenen Client innerhalb der Reihenschaltung adressiert, **dadurch gekennzeichnet, dass** ein Versorgungskabel an eine externe Steckdose (5) angeschlossen wird, mit dem eine in dem Gehäuse angeordnete, von außen zugängliche Steckdose (5) mit einer Versorgungsspannung versorgt wird zum Anschluss eines Clients, **wobei** eine Meldevorrichtung vorgesehen ist, die dazu eingerichtet ist, im Falle eines Fehlers des Anschlussmoduls oder einer Unterbrechung der Verbindung ein Fehlersignal mit einem Positionscode an eine Zentrale zu übermitteln.

15. Verfahren nach Anspruch 14, **dadurch gekennzeichnet, dass** das Anschlussmodul mit einem Server und/oder weiteren Anschlussmodulen in Reihe geschaltet wird.

16. Verfahren nach dem vorhergehenden Anspruch, **dadurch gekennzeichnet, dass** das Anschlussmodul mit dem Server oder dem weiteren Anschlussmodul über ein als Einfach- oder als Doppelkabel ausgebildetes Glasfaserkabel verbunden wird.

17. Verfahren nach einem der beiden vorhergehenden Ansprüche, **dadurch gekennzeichnet, dass** die Anschlussmodule zu einem einfachen oder doppelläufigen Ring miteinander vernetzt werden, wobei das Glasfaserkabel mit dem Dateneingang eines Anschlussmoduls und dem Datenausgang eines weiteren Anschlussmoduls oder eines Servers verbunden wird, und zum Schließen des Rings das letzte Anschlussmodul mit seinem Datenausgang mit einem Dateneingang des Servers verbunden wird.

18. Verfahren nach einem der Ansprüche 14 bis 17, **dadurch gekennzeichnet, dass** in einem Raum statt eines Anschlussmoduls nach einem der Ansprüche 1 bis 11 ein passives Modul als "Dummy" zwischengeschaltet wird, das eine Verkabelung wie das Anschlussmodul, aber keine Anschlussmöglichkeit für Clients aufweist.

19. Containersiedlung mit mehreren nebeneinander und/oder übereinander gestapelten Containern, **dadurch gekennzeichnet, dass** in jedem Container zumindest ein Anschlussmodul nach einem der Ansprüche 1 bis 11 angeordnet ist und die Anschlussmodule untereinander in Reihe geschaltet sind.

20. Containersiedlung nach dem vorhergehenden Anspruch, **dadurch gekennzeichnet, dass** die Anschlussmodule zu einem geschlossenen Ring miteinander verbunden sind.

21. Containersiedlung nach Anspruch 19 oder 20, **dadurch gekennzeichnet, dass** die Container über Glasfaserleitung miteinander vernetzt sind.

## Claims

1. Connection module for connecting at least one client, which can be actuated using a network protocol, to a local and/or global area network having an erectable or suspendable housing that is in the form of an elongate cable duct, and having at least one first transfer interface for connecting the client, wherein the connection module has at least one connecting apparatus, which actively sets up a network connection between the network and the client via the first transfer interface, and a data input, connected to the connecting apparatus, and also a data output for connection to the network and/or for setting up a series circuit having a plurality of connection modules, wherein the connecting apparatus and/or the network protocol that is used to organize the communication within the network are in a form such that the client connected to the connection module is addressed within the series circuit,
wherein the connecting apparatus is a router and/or a switch (3) or comprises a router and/or a switch (3), **characterized in that** a supply cable that can be connected to an external socket (5) is provided that is supplied with a supply voltage in order to supply at least one externally accessible socket (5) arranged in the housing, wherein a signalling apparatus is provided that is set up to transmit an error signal with a position code to a control centre in the event of an error in the connection module or an interruption in the connection.

2. Connection module according to Claim 1, **characterized in that** the signalling apparatus has a SIM card and is set up to send the error code using a wirelessly transmitted SMS.

3. Connection module according to Claim 1 or 2, **characterized in that** the housing can have at least one end plugged together or connected with/to one or more other housings in the form of elongate cable ducts, to form a longer cable duct, particularly one having the length of a room.

4. Connection module according to one of the preceding claims, **characterized in that** routed out of the housing is a cable end that forms the data input, or **in that** the data input is a mateable connection, particularly a plug or a socket.

5. Connection module according to one of the preceding claims, **characterized in that** routed out of the housing is a cable end that forms the data output, or **in that** the data output is a mateable connection, particularly a plug or a socket.

6. Connection module according to one of the preceding claims, **characterized in that** the data input and the data output are optical interfaces for connecting the connection module to a fibre optic network or dual fibre optic network.

7. Connection module according to one of the preceding claims, **characterized in that** it has at least one further transfer interface, which is different from the first transfer interface and connected to the connecting apparatus, for connecting a terminal of a different terminal type from the client.

8. Connection module according to Claim 7, **characterized in that** the first and/or the further transfer interface is/are a radio interface and the connection module has a WLAN router and/or a Bluetooth transmission/reception apparatus for setting up a radio network in the surroundings, which WLAN router or Bluetooth transmission/reception apparatus provides the radio interface.

9. Connection module according to one of the preceding claims, **characterized in that** the connecting apparatus has a modulation/demodulation apparatus that is set up to isolate different signal types from one another that are provided via the data input using different carrier frequencies or transmission protocols and to supply said signal types to the different terminals connected by means of the different transfer interfaces.

10. Connection module according to one of the preceding claims, **characterized in that** it has a computer that interacts with or contains the components of the connecting apparatus in order to address the clients.

11. Connection module according to one of the preceding claims, **characterized in that** it has an NTBA, a splitter for dividing a telephone signal into a DSL signal and an ISDN signal or an analogue telephone signal, or a telephone installation.

12. Network, **characterized by** a plurality of connection modules according to one of the preceding claims, wherein at least a plurality of the connection modules are connected to one another in a series circuit.

13. Network according to the preceding claim, **characterized in that** the supply with the network connection and/or with the supply voltage is in the form of a mateable connection in each case, and wherein the connection modules can be connected in series with other adjacent connection modules, preferably by means of a cable.

14. Method for connecting at least one client, which can be actuated using a network protocol, in a room to a local and/or global area network, wherein at least one connection module according to one of the preceding claims is erected or suspended in the room and is connected to the network at least via the data input and to the client via the first transfer interface, wherein the connecting apparatus actively sets up a network connection between the network and the client via the first transfer interface, and the connecting apparatus and/or the network protocol, which is used to organize the communication within the network, addresses the client connected to the connection module within the series circuit, **characterized in that** a supply cable is connected to an external socket (5) and is used to supply a supply voltage to an externally accessible socket (5) arranged in the housing in order to connect a client, wherein a signalling apparatus is provided that is set up to transmit an error signal with a position code to a control centre in the event of an error in the connection module or an interruption in the connection.

15. Method according to Claim 14, **characterized in that** the connection module is connected in series with a server and/or further connection modules.

16. Method according to the preceding claim, **characterized in that** the connection module is connected to the server or the further connection module by means of a fibre optic cable in the form of a single cable or in the form of a dual cable.

17. Method according to one of the two preceding claims, **characterized in that** the connection modules are networked to one another to form a single or dual ring, wherein the fibre optic cable is connected to the data input of a connection module and to the data output of a further connection module or of a server, and the last connection module has its data output connected to a data input of the server in order to complete the ring.

18. Method according to one of Claims 14 to 17, **characterized in that** instead of a connection module according to one of Claims 1 to 11 a passive module is interposed in a room as a "dummy", said passive module having wiring like the connection module but no connection option for clients.

19. Container settlement having a plurality of containers stacked next to one another and/or above one another, **characterized in that** each container contains at least one connection module according to one of Claims 1 to 11 and the connection modules are connected to one another in series.

20. Container settlement according to the preceding claim, **characterized in that** the connection modules are connected to one another to form a closed ring.

21. Container settlement according to Claim 19 or 20, **characterized in that** the containers are networked to one another by fibre optic line.

## Revendications

1. Module de raccordement permettant de raccorder à un réseau local et/ou global au moins un client commandé par un protocole de réseau,
le module présentant un boîtier apte à être posé ou suspendu configuré comme canal allongé pour câble et au moins une première interface de transmission permettant le raccordement du client,
le module de raccordement présentant au moins un dispositif de raccordement établissant activement une liaison réseau entre le réseau et le client par l'intermédiaire de la première interface de transmission et une entrée de données raccordée au dispositif de raccordement ainsi qu'une sortie de données qui permet la liaison au réseau et/ou d'établir un circuit série constitué de plusieurs modules de raccordement,
le dispositif de raccordement et/ou le protocole de réseau par lequel la communication est organisée à l'intérieur du réseau étant configurés de telle sorte que le client raccordé au module de raccordement reçoit une adresse à l'intérieur du circuit série,
le dispositif de raccordement étant un routeur et/ou un commutateur (3) ou comportant un routeur et/ou un commutateur (3),
**caractérisé en ce que**
un câble d'alimentation qui peut être raccordé à une prise de courant externe (5) est prévu, est alimenté à une tension d'alimentation pour alimenter au moins une prise de courant (5) disposée dans le boîtier et accessible de l'extérieur et conçue pour transmettre un signal de défaut et un code de position à une centrale en cas de défaut du module de raccordement ou d'interruption de la liaison.

2. Module de raccordement selon la revendication 1, **caractérisé en ce que** le dispositif de signalisation présente une carte SIM et est conçu pour envoyer le code d'erreur par SMS envoyé sans fil.

3. Module de raccordement selon les revendications 1 ou 2, **caractérisé en ce que** le boîtier peut être assemblé ou raccordé par au moins un côté frontal à un ou plusieurs autres boîtiers qui présentent la forme de canaux allongés pour câble, pour former un canal pour câble plus long et en particulier de la longueur d'un local.

4. Module de raccordement selon l'une des revendications précédentes, **caractérisé en ce qu'**une extrémité de câble est prolongée hors du boîtier et forme l'entrée de données ou **en ce que** l'entrée de données est une borne de raccordement enfichable, en particulier une fiche ou une douille.

5. Module de raccordement selon l'une des revendications précédentes, **caractérisé en ce qu'**une extrémité de câble est prolongée hors du boîtier et forme la sortie de données ou **en ce que** la sortie de données est une borne de raccordement enfichable, en particulier une fiche ou une douille.

6. Module de raccordement selon l'une des revendications précédentes, **caractérisé en ce que** l'entrée de données et la sortie de données sont des interfaces optiques qui permettent de raccorder le module de raccordement à un réseau à fibre optique ou à un réseau à double fibre optique.

7. Module de raccordement selon l'une des revendications précédentes, **caractérisé en ce qu'**il présente au moins une autre interface de transmission, différente de la première interface de transmission et reliée au dispositif de raccordement, pour raccorder un terminal d'un type différent de celui du terminal du client.

8. Module de raccordement selon la revendication 7, **caractérisé en ce que** la première interface et/ou l'autre interface sont des interfaces radio et **en ce que** le module de raccordement présente un routeur WLAN et/ou un dispositif d'émission-réception Bluetooth permettant d'établir un réseau radio dans l'environnement et qui forme l'interface radio.

9. Module de raccordement selon l'une des revendications précédentes, **caractérisé en ce que** le dispositif de raccordement présente un dispositif de modulation-démodulation conçu pour séparer les uns des autres des signaux de types différents délivrés à différentes fréquences porteuses ou différents protocoles de transmission par l'intermédiaire de l'entrée de données, et de les amener aux différents terminaux raccordés par l'intermédiaire des différentes interfaces de transmission.

10. Module de raccordement selon l'une des revendications précédentes, **caractérisé en ce qu'**il présente un ordinateur qui coopère avec les composants de l'ensemble de raccordement pour l'adressage des clients ou qui contient ces composants.

11. Module de raccordement selon l'une des revendications précédentes, **caractérisé en ce qu'**il présente un NTBA, un diviseur qui divise un signal téléphonique en signal DSL et signal ISDN ou un signal téléphonique analogique, ou une installation téléphonique.

12. Réseau **caractérisé par** plusieurs modules de raccordement selon l'une des revendications précédentes, au moins certains des modules de raccordement étant raccordés les uns aux autres en un circuit série.

13. Réseau selon la revendication précédente, **caractérisé en ce que** l'alimentation avec la liaison au réseau et/ou avec la tension d'alimentation est configurée comme borne de raccordement enfichable, les modules de raccordement pouvant être raccordés à d'autres modules de raccordement voisins de préférence au moyen d'un câble.

14. Procédé pour raccorder à un réseau local et/ou global d'au moins un client commandé par un protocole de réseau et présent dans un local, au moins un module de raccordement selon l'une des revendications précédentes étant posé ou suspendu dans le local et étant raccordé au réseau au moins par l'entrée de données et au client par la première interface de transmission, l'ensemble de raccordement établissant activement une liaison réseau entre le réseau et le client par l'intermédiaire de la première interface de transmission et l'ensemble de raccordement et/ou le protocole réseau par lequel la communication est organisée à l'intérieur du réseau attribuant une adresse à l'intérieur du circuit série au client raccordé au module de raccordement,
**caractérisé en ce que**
un câble d'alimentation est raccordé à une prise de courant externe (5) par laquelle une prise de courant (5) disposée dans le boîtier et accessible de l'extérieur est alimentée en une tension d'alimentation pour raccorder un client, un dispositif de signalisation étant prévu et conçu pour transmettre un signal de défaut et un code de position à une centrale en cas de défaut du module de raccordement ou interruption de la liaison.

15. Procédé selon la revendication 14, **caractérisé en ce que** le module de raccordement est raccordé à un serveur et/ou à d'autres modules de raccordement en série.

16. Procédé selon la revendication précédente, **caractérisé en ce que** le module de raccordement est raccordé au serveur ou à l'autre module de raccordement par l'intermédiaire d'un câble à fibre de verre configuré comme câble simple ou câble double.

17. Procédé selon l'une des deux revendications qui précèdent, **caractérisé en ce que** les modules de raccordement sont raccordés les uns aux autres en un boucle simple ou double, le câble de fibres de verre étant raccordé à l'entrée de données d'un module de raccordement et à la sortie de données d'un autre module de raccordement ou d'un serveur, le dernier module de raccordement étant raccordé par sa sortie de données à l'entrée de données du serveur pour fermer la boucle.

18. Procédé selon l'une des revendications 14 à 17, **caractérisé en ce que** dans un local, au lieu d'un module de raccordement selon l'une des revendications 1 à 11, un module passif est intercalé en tant que "module factice" et présente un câblage similaire à celui du module de raccordement mais pas de possibilité de raccordement à des clients.

19. Assemblage de plusieurs conteneurs empilés les uns à côté des autres et/ou les uns au-dessus des autres, **caractérisé en ce qu'**au moins un module de raccordement selon l'une des revendications 1 à 11 est disposé dans chaque conteneur et **en ce que** les modules de raccordement sont raccordés les uns aux autres en série.

20. Assemblage de plusieurs conteneurs selon la revendication précédente, **caractérisé en ce que** les modules de raccordement sont raccordés les uns aux autres en boucle fermée.

21. Assemblage de plusieurs conteneurs selon les revendications 19 ou 20, **caractérisé en ce que** les conteneurs sont raccordés les uns aux autres par un conducteur à fibre de verre.
